# FASCICULE DE BREVET EUROPEEN

(11) **EP 3 022 940 B1**
(45) Date de publication et mention de la délivrance du brevet: **05.09.2018**
(21) Numéro de dépôt: 14734841.1
(22) Date de dépôt: 04.07.2014
(51) Int. Cl.: H04N 21/4385, H04N 21/4405, H04N 21/4408, H04N 21/4623

(54) **METHODE POUR LA PROTECTION DE CLES DE DECHIFFREMENT DANS UN DECODEUR ET DECODEUR POUR LA MISE EN OEUVRE DE CETTE METHODE**
METHODE UND VORRICHTUNG ZUM SCHUTZ DER DECHIFFRIERSCHLÜSSEL EINES DECODERS
METHOD AND DEVICE FOR PROTECTING DECRYPTION KEYS OF A DECODER

(30) Priorité: 19.07.2013 EP 13177287
(43) Date de publication de la demande: 25.05.2016
(73) Titulaire: Nagravision S.A., 1033 Cheseaux-sur-Lausanne (CH)
(72) Inventeur: MACCHETTI (IT), Marco, I-22070 Casnate con Bernate (IT); PERRINE, Jérôme, CH-1122 Romanel sur Morges (CH); SERVET, Patrick, CH-1033 Cheseaux-sur-Lausanne (CH); HUNACEK, Didier, CH-1807 Blonay (CH)
(74) Mandataire: Wenger, Joel-Théophile
(86) Numéro de dépôt international: PCT/EP2014/064332
(87) Numéro de publication internationale: WO 2015/007549

(56) Documents cités:
- EP-A1- 2 355 502
- EP-A1- 2 373 019
- EP-A1- 2 393 292
- WO-A2-2006/044547
- US-A1- 2008 010 469
- US-A1- 2012 257 749

## Description

### Domaine technique

La présente demande concerne le domaine de l'acquisition conditionnelle de données numériques, telles que des données diffusées dans le cadre de la télévision à péage, et en particulier s'intéresse à la sécurisation des clés de déchiffrement de contenus numériques, principalement de contenus audio/vidéo.

### Etat de la technique

Un contenu, par exemple de type audio/vidéo (A/V), est encrypté par des clés appelées mots de contrôle (CW - *Control Word*) qui changent régulièrement, typiquement toutes les minutes. Le contenu ainsi encrypté est ensuite transmis aux récepteurs selon un mode de diffusion, c'est-à-dire que le même contenu est reçu par une pluralité de récepteurs.

Les mots de contrôle sont encryptés par une clé de transmission (TK) qui change à une fréquence beaucoup plus basse, par exemple tous les mois. Un mot de contrôle encrypté est placé dans un message d'autorisation (ECM *-Entitlement Control Message*) accompagné des conditions de déchiffrement. Ces conditions décrivent les droits que doit posséder le récepteur pour être autorisé à accéder au contenu. Ces droits sont régulièrement transmis sous une forme chiffrée au récepteur par le biais de messages d'administration des droits (EMM - *Entitlement Management Message*). Les messages d'autorisation ECM et les message d'administration des droits EMM forment un ensemble de messages de données DT qui sont joints au contenu encrypté pour former un flux de transport (TS - *Transport Stream*) envoyé à destination des récepteurs.

L'offre proposée aux abonnés de télévision à péage comprend de nombreux canaux (CH1, CH2, CH3, etc..) qui sont chacun encryptés selon une ou des clés particulières. Ceci est nécessité par le fait qu'un abonné peut souscrire à un abonnement pour un canal sans avoir le droit de bénéficier des autres canaux.

Les messages d'autorisation ECM sont encryptés avec une clé propre au système de gestion (CAS - *Conditional Access System*) généralement associé à la tête de réseau (*Headend*) duquel provient le flux de transport. Le récepteur de l'abonné comprend entre autre, une unité cryptographique sécurisée (SM - *Security Module*) en charge de décrypter ces messages et un décodeur (STB - *Set-Top-Box*) qui va déchiffrer le contenu encrypté afin de pouvoir visualiser ledit contenu. Le système de gestion transmet ces messages ECM sous forme encryptée à l'unité cryptographique en charge de décrypter ces messages, gère les autorisations et selon les droits de l'abonné, transmet au décodeur les informations nécessaires au décryptage des signaux vidéo et audio.

Les résultats du décryptage par l'unité cryptographique sont précisément les mots de contrôle CW. Ces mots de contrôle vont piloter le décodeur et l'abonné pourra ainsi bénéficier en clair des informations transmises.

Comme indiqué plus haut, ces mots de contrôle sont changés régulièrement afin d'empêcher un pirate de calculer ces informations de contrôle au moyen d'un ordinateur puissant, et bénéficier gratuitement de la prestation soumise à péage. C'est pourquoi ces mots de contrôle sont changés dans un intervalle usuellement régulier, la période étant typiquement de 1 à 20 secondes. Cette période est appelée crypto-période.

Les messages d'autorisation ECM sont envoyés avec une fréquence beaucoup plus élevée que la crypto-période, par exemple toutes les 100 millisecondes. Ceci est indispensable d'une part lors de la mise en service du décodeur et, d'autre part lors du changement de canaux (CH1, CH2, CH3, etc...).

En effet, pour pouvoir visualiser l'émission souhaitée, les mots de contrôle sont nécessaires au décryptage des signaux. On imagine mal devoir attendre 5 secondes devant son écran pour que l'image en clair apparaisse.

Dans le deuxième cas, les mots de contrôle étant propres à chaque canal, il faudrait attendre la fin de la crypto-période pour recevoir le message d'autorisation permettant le décryptage des signaux du nouveau canal. De la même manière que précédemment, on ne peut tolérer un délai de plusieurs secondes lors d'un changement de canal.

C'est pourquoi, dans la pratique, les messages d'autorisation ECM sont envoyés à une fréquence comprise entre 5 et 20 par seconde.

Ainsi, une fois que le décodeur a reçu le mot de contrôle, il peut décrypter le contenu audio/vidéo. Un décodeur actuellement peut traiter plus d'un flux audio/vidéo encrypté à la fois. Ceci peut être le cas pour une fonction PIP (Picture-In-Picture), l'enregistrement d'un flux et le visionnement d'un autre, ou le visionnement simultané de plusieurs flux sur un même écran (mosaïque d'images provenant de plusieurs canaux différents) ou sur plusieurs écrans. A cet effet, le décodeur pourra traiter en parallèle plusieurs flux et donc doit disposer de plusieurs mots de contrôle en même temps.

Une autre explication de la présence de plusieurs mots de contrôle concernant plusieurs canaux est la vitesse de changement de canal. En effet, il est souhaitable que ce changement se fasse dans le temps le plus court et selon un mode particulier, bien que le décodeur puisse traiter un ou deux flux simultanément, le décodeur peut stocker 10 ou 20 mots de contrôle à un temps donné. L'unité cryptographique en charge de traiter les ECM va extraire les mots de contrôle d'une pluralité de canaux et les envoyer au décodeur même si ce dernier n'est pas en charge de décrypter ce contenu. Ceci permet d'être immédiatement prêt avec le mot de contrôle chargé dans le décodeur dès que l'utilisateur demande un changement de canal.

Bien que pour un temps donné, un seul mot de contrôle est actif, le décodeur doit disposer du mot de contrôle courant et du mot de contrôle suivant. A cet effet, le contenu encrypté comprend une indication pour identifier le mot de contrôle (ODD, EVEN).

Sur la base de ce qui précède, il est apparent qu'un décodeur va mémoriser un grand nombre de mots de contrôle, soit pour une utilisation simultanée, soit pour être prêt en cas de changement de canaux, soit pour une combinaison de ces deux modes. Il peut ainsi décrypter trois canaux simultanément et stocker les mots de contrôle pour les 30 canaux possibles que l'utilisateur peut recevoir. Chaque canal représentant deux mots de contrôle.

Du fait que l'unité cryptographique est sécurisée d'une manière satisfaisante, des tiers malveillants se sont intéressés à l'interception des mots de contrôle transmis par l'unité cryptographique. C'est pourquoi des solutions ont été proposées comme décrite dans le brevet EP 1078524. Une encryption est réalisée sur les mots de contrôle par l'unité cryptographique avant leur transmission au récepteur. Le récepteur et l'unité cryptographique partagent une clé unique ce qui permet d'apparier ces deux éléments. Un message intercepté entre ces deux éléments ne peut être utilisé par un autre récepteur puisque la clé d'appariement est unique.

Une fois arrivé dans le récepteur, le message est décrypté par la clé d'appariement et le mot de contrôle est stocké en clair dans une mémoire sécurisée du récepteur.

Le document WO 2006/044547 s'intéresse aux délais que requiert un décodeur lorsque, à partir d'un flux de transport encrypté, il doit commuter d'un canal à un autre pour satisfaire la demande d'un utilisateur désirant passer d'une chaîne de télévision à une autre. Ce document divulgue l'utilisation d'une mémoire tampon (*buffet*) dans laquelle sont temporairement stockés des mots de contrôle en vue réduire le délai d'attente entre l'instant où l'utilisateur a sélectionné un autre canal et le moment où le contenu de ce nouveau canal est affiché en clair sur l'écran de télévision. Au sein de la mémoire tampon, les mots de contrôle sont constamment renouvelés selon le principe d'une pile de mots de contrôle de laquelle les anciens mots de contrôle sont successivement retirés pour être remplacés par de nouveaux. Cette mémoire tampon est gérée par un gestionnaire de mots de contrôle. Pour pouvoir réduire le temps nécessaire à la commutation, ce document suggère notamment de stocker dans la mémoire tampon, non seulement les mots de contrôle utilisés pour restituer les chaînes affichées à un moment donné par le téléviseur, mais également les mots de contrôle des autres chaînes, à savoir des chaînes qui ne sont ni visionnées ni enregistrées à cet instant. Ce document suggère enfin que les mots de contrôle stockés dans la mémoire tampon le soient sous une forme chiffrée par une clé propre à un canal sécurisé qui relie le gestionnaire de mots de contrôle au module de sécurité duquel ces mots de contrôle sont extraits des messages ECMs. Lors de la commutation d'une chaîne à un autre, les mots de contrôle relatifs au nouveau canal vont être déchiffrés par le gestionnaire au moyen de la clé qui est associée au canal sécurisé entre ce gestionnaire et le module de sécurité. Puis, ils vont être transmis à l'unité de désembrouillage appropriée afin que cette dernière puisse procéder au déchiffrement du nouveau canal audio/vidéo.

L'invention citée dans le document US 2012/0257749 vise quant à elle à renforcer la sécurité des mots de contrôle tout en améliorant l'efficacité et la vitesse des opérations de vérification préalable au désembrouillage d'un flux audio/vidéo protégé. Dans ce but, la méthode suggérée dans ce document est essentiellement centralisée sur des vérifications de conditions d'accès effectuées successivement par deux dispositifs à accès conditionnel sur un message ECM. Ainsi, cette invention propose de modifier les messages de contrôle ECM de sorte que chaque ECM est structuré de façon à ce qu'un premier message ECM1 encapsule un second message ECM2 en lieu et place du mot de contrôle normalement contenu dans le premier message ECM1. Ainsi, ce document suggère une double vérification des conditions d'accès par l'agencement successif de deux dispositifs à accès conditionnel, l'un pour l'ECM1, l'autre pour l'ECM2, avant que soit restitué le mot de contrôle contenu dans le second message ECM2.

### Brève description de l'invention

La présente demande traite de la question de la sécurité des clés de déchiffrement (CW) stockées dans le décodeur. Le décodeur selon l'invention fait partie du récepteur et est généralement sous la forme d'un circuit spécialisé intégrant de nombreuses fonctions telles que la gestion du récepteur, l'affichage des menus, la gestion de l'enregistrement. Il s'agit d'un ensemble de composants spécialisés dont l'un est un microprocesseur qui intègre sur une partie du silicium une fonction décodeur. Ce composant dispose de mémoire interne et peut accéder à des programmes ou données stockés dans une mémoire externe.

Généralement, les mots de contrôle sont stockés dans une mémoire interne dédiée à cet effet. Il faut que les mots de contrôle soient disponibles très rapidement lors d'un changement de crypto-période. Bien que cette mémoire soit difficile d'accès, les attaques software ou par glitch, laser, buffer overflow ont donné des résultats positifs.

C'est pourquoi il est proposé de sécuriser le décodeur par l'encryption des mots de contrôle en attente d'être utilisés.

Il est ainsi proposé une méthode pour sécuriser des mots de contrôle stockés, dans une mémoire, au sein d'un décodeur en charge de désembrouiller au moins un contenu audio/vidéo protégé par lesdits mots de contrôle. Le décodeur comprends un gestionnaire de clés connecté, via un canal sécurisé, à un module de sécurité en charge de délivrer les mots de contrôle au décodeur sous une forme chiffrée, au moins une unité de désembrouillage en charge de déchiffrer le contenu audio/vidéo, et un registre de mots de contrôle administré par le gestionnaire de clés. Selon l'invention, cette méthode comprend les étapes suivantes:
- charger, pour chaque unité de désembrouillage dans un répertoire de clés administré par le gestionnaire, une clé d'appariement (PK) qui d'une part, est référencée par un identifiant (ID) qui l'associe à l'unité de désembrouillage pour qui elle est uniquement dédiée et d'autre part, est connue de cette unité de désembrouillage,
- réceptionner par le gestionnaire de clés, au moins un mot de contrôle (CW) chiffré par le module de sécurité, ce mot de contrôle (CW) étant en outre référencé par une indication (D) permettant d'identifier l'unité de désembrouillage à qui il est destiné,
- déchiffrer, par le gestionnaire de clés, ce mot de contrôle au moyen d'une clé de déchiffrement propre au canal sécurisé,
- identifier, dans le répertoire, la clé d'appariement dont l'identifiant (ID) correspond à l'indication de destination (D) associée au mot de contrôle, puis
- chiffrer ce mot de contrôle à l'aide de la clé d'appariement ainsi identifiée, et
- stocker, dans le registre d'une manière chronologique et référencée, le mot de contrôle (chiffré par la clé PK) de façon à ce que tout mot de contrôle spécifique requit par une unité de désembrouillage pourra être retiré du registre afin d'être déchiffré par cette unité de désembrouillage et utilisé par cette dernière pour désembrouiller ledit contenu audio/vidéo (ou au moins une partie de ce contenu).

La présente demande propose également un décodeur pour la mise en oeuvre de cette méthode selon tout mode de réalisation de cette dernière. Le décodeur, second objet de la présente invention, comprend un gestionnaire de clés connecté, via un canal sécurisé, à un module de sécurité en charge de délivrer des mots de contrôle (CW) au décodeur sous une forme chiffrée, au moins deux unités de désembrouillage en charge de déchiffrer chacune un contenu audio/vidéo chiffré par une partie des mots de contrôle, et un registre de mots de contrôle administré par le gestionnaire de clés. Ce dernier étant en outre configuré pour déchiffrer les mots de contrôle reçus du module de sécurité et pour les stocker dans le registre sous une forme chiffrée. Selon l'invention, ce décodeur comprend également:
- une mémoire pour stocker au moins un répertoire de clés administré par le gestionnaire et configuré pour répertorier une pluralité de clés d'appariement (PK), chaque clé d'appariement étant référencée par un identifiant (ID) qui l'associe de manière unique à une des unités de désembrouillage du décodeur,
- un module de référencement permettant de référencer chaque mot de contrôle (CW) par une indication (D) qui identifie l'unité de désembrouillage, à qui ce mot de contrôle est destiné, en fonction d'un canal audio/vidéo duquel chaque mot de control est extrait.

Selon l'invention, le gestionnaire de clés est également configuré pour pouvoir identifier, dans le répertoire, la clé d'appariement dont l'identifiant (ID) correspond à l'indication de destination (D) qui référence le mot de contrôle, et chiffrer ce dernier à l'aide de la clé d'appariement ainsi identifiée. Enfin, le registre est configuré pour stocker les mots de contrôle (chiffrés par la clé PK) d'une manière chronologique et référencée.

### Brève description des figures

La présente invention sera mieux comprise grâce aux explications basées sur les figures dans lesquelles :
- la figure 1 illustre les principaux composants participants à l'invention dans un décodeur,
- la figure 2 illustre les échanges s'opérant entre différents éléments de ce décodeur.

### Description détaillée

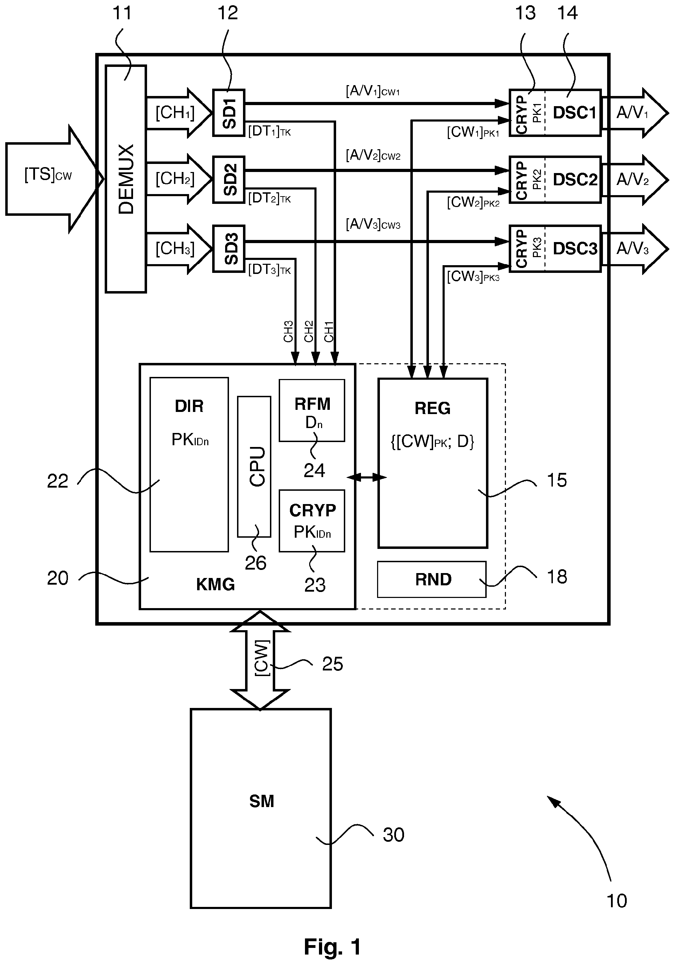

La figure 1 illustre un décodeur 10, en particulier les éléments de ce décodeur utiles à la compréhension de l'invention. Le décodeur 10 reçoit, sous forme de flux de transport TS, des flux audio/vidéo encryptés par des mots de contrôle CW.

Dans la présente description ainsi que dans les figures annexées, on relèvera que le chiffrement (appelé aussi encryption) d'un flux ou de n'importe quelle donnée sera noté par l'encadrement de cette donnée au moyen de crochets. Ainsi, dans la figure 1, le flux de transport TS chiffré par des mots de contrôle est noté [TS]cw. Ce flux de transport est typiquement constitué de paquets de données au sein d'un signal diffusé par la tête de réseau (headend) vers une pluralité de décodeurs 10, par exemple par voie satellitaire ou terrestre (herzienne), par un réseau filaire (téléphones fixe, internet, câble) ou par un réseau sans fil (téléphonie mobile ou autre réseau de diffusion).

Comme les paquets de données ont été multiplexés par la tête de réseau pour que l'information qu'ils contiennent puisse être véhiculée part un seul support de transmission (flux de transport TS), ce signal composite doit être désassemblé par un démultiplexeur 11 dès son entrée dans le décodeur 10 pour pouvoir retrouver chaque canal audio/vidéo CH1, CH2, CH3, etc... qu'il contient. Chacun de ces canaux (encore chiffrés), comporte des données audio (par exemple plusieurs canaux audio), des données vidéo ainsi que des données de contrôle (ECM, EMM) et autres informations (metadata). Comme schématisé sur la figure 1, les données audio/vidéo ([A/V]) de chaque canal sont ensuite séparées des autres données (Data), en particulier des données de contrôle ([DT]), par un dispositif de triage 12 (SD - *Sorting Device*). Ces données audio/vidéo sont chiffrées par des mots de contrôle CW contenus dans les messages ECM faisant parties des données de contrôle DT. Ces dernières sont également chiffrées par une clé de transmission TK.

Le décodeur 10 comprend en outre un gestionnaire de clés 20 (KMG - *Key Manager*) connecté, via un canal sécurisé 25, à un module de sécurité 30 (SM - *Security Module*). Ce dernier est en charge de délivrer, sous une forme chiffrée, des mots de contrôle au décodeur 10 après avoir vérifié que les droits, gérés par les messages EMM, sont également présents dans l'environnement de l'utilisateur (en particulier dans le module de sécurité).

Un tel module de sécurité 30 peut être réalisé en particulier selon quatre formes d'exécution distinctes. L'une d'elles est une carte à microprocesseur, une carte à puce, ou plus généralement un module électronique (ayant une forme de clé, de badge,...). Un tel module est généralement amovible, connectable au récepteur et réputé inviolable. L'échange de données entre le décodeur et le module de sécurité qui lui est associé se fait généralement par le biais d'un contact physique (contacts électrique d'un port de communication). Cependant, il n'est pas exclu de prévoir, entre ces deux entités, un échange de données via une liaison sans contact, par exemple de type ISO 15443.

Une deuxième forme d'exécution connue est celle d'un circuit intégré placé, généralement de façon définitive et inamovible, dans le boîtier du récepteur (décodeur). Une variante est constituée d'un circuit monté sur un socle ou un connecteur, tel qu'un connecteur de module SIM.

Selon une troisième forme d'exécution, le module de sécurité peut être intégré, au sein du récepteur, dans un organe ayant également une autre fonction, par exemple dans le microprocesseur du décodeur.

Selon une quatrième forme de réalisation, le module de sécurité n'est pas réalisé sous une forme matérielle, mais sa fonction est mise en oeuvre sous une forme logicielle, uniquement.

Bien que le niveau de sécurité diffère entre ces cas, la fonction est quant à elle identique de sorte qu'on parlera de module de sécurité quelle que soit la manière de réaliser ce module. Dans les quatre formes décrites ci-dessus, le module de sécurité possède des moyens (mémoire, unité centrale) pour stocker et exécuter un programme interne. Ce programme permet d'effectuer différentes opérations de sécurité, telles que vérifier les droits, effectuer des déchiffrements, activer un module pour y effectuer des opérations cryptographiques, etc.

Si la présence des droits requis pour pouvoir accéder au contenu audio/vidéo d'une chaîne (CH1, CH2, CH3, etc...) est avérée, le module de sécurité 30 extrait les mots de contrôle CW des messages ECM, après les avoir déchiffrés au moyen de la clé de transmission TK, puis les ré-encrypte en utilisant une clé unique SK (*Secret Key*), qui est en outre uniquement connue du gestionnaire de clés 20 et qui est donc propre au canal sécurisé 25 établi entre ces deux entités 20, 30.

Pour pouvoir déchiffrer les mots de contrôle ré-encryptés par le module de sécurité, le gestionnaire de clés 20 comprend un module cryptographique 23 (CRYP - *Cryptographie module*). Ainsi, cette unité 23 est configurée pour pouvoir notamment déchiffrer les mots de contrôle reçus du module de sécurité 30 au moyen de la clé unique SK.

En revenant aux principaux éléments qui composent le décodeur 10, on remarque que ce dernier comprend au moins une unité de désembrouillage 14 (DSC - *Descrambling unit*) en charge de déchiffrer le contenu audio/vidéo encrypté [A/V] reçu du dispositif de triage 12 correspondant.

Le décodeur 10 intègre également un registre 15 (REG - *Registet*) de mots de contrôle qui est administré par le gestionnaire 20. Comme illustré en trait interrompu dans la figure 1, ce registre 15 (ou table des mots de contrôle) pourrait faire partie du gestionnaire 20.

Le décodeur 10, de préférence le gestionnaire de clés 20 de ce décodeur, comprend également une mémoire pour stocker un répertoire 22 de clés (DIR - *Directory*). Cette mémoire ou ce répertoire est configuré pour répertorier une pluralité de clés d'appariements (PK - *Pairing Key*). Ce répertoire 22 est destiné à être administré par le gestionnaire 20.

Parmi les composants de ce décodeur, on mentionnera encore un module de référencement 24 (RFM - *Referencing module*) permettant de référencer chaque mot de contrôle (CW) par une indication (D) qui identifie l'unité de désembrouillage 14 à qui ce mot de contrôle est destiné en fonction de l'identité (CH1, CH2, CH3, etc...) d'un canal audio/vidéo duquel chaque mot de control est extrait.

Enfin, le décodeur peut également comporter au moins un générateur 18 de nombres aléatoires qui, comme il sera décrit plus après la description, pourra être utilisé pour générer des clés d'appariement PK. Tout comme le registre 15, ce générateur de nombres aléatoires pourrait également faire partir du gestionnaire 20. En variante, un tel générateur 18 pourrait être intégré ou associé à chaque unité de désembrouillage 14.

Comme illustré à la figure 1, le répertoire 22 et/ou le module de référencement 24 font de préférence partie du gestionnaire 20. Ce dernier intègre enfin une unité centrale 26 (CPU - Central Processing Unit) utile à la gestion des différents organes qui sont ou peuvent être inclus dans le gestionnaire de clés 20.

On notera que le nombre d'unités de désembrouillage 14 (en l'occurrence trois) représentées à la figure 1 est donné à titre d'exemple nullement limitatif. Le décodeur 10 comprend au moins une unité de désembrouillage 14, de préférence au moins deux unités 14, chacune en charge de déchiffrer un des flux audio/vidéo multiplexés. Le nombre d'unités de désembrouillage peut être multiplié de manière à pouvoir traiter en parallèle autant de flux audio/vidéo que nécessaire.

Pour faire suite à la description des principaux composants du décodeur qui sont nécessaires à la compréhension de l'invention, les étapes de la méthode visée par cette invention vont à présent être décrites plus en détail.

Dans son premier objet, l'invention se réfère à une méthode pour sécuriser les mots de contrôle CW au sein même du décodeur 10.

La première étape de cette méthode vise à charger, pour chaque unité de désembrouillage 14, une clé d'appariement PK dans le répertoire de clés 22. Cette clé d'appariement PK est référencée par un identifiant ID qui l'associe à l'unité de désembrouillage pour qui elle est uniquement dédiée. Ainsi, il y aura autant de clés d'appariement PK qu'il y a d'unités de désembrouillage 14. Comme illustré sur la figure 1, la clé d'appariement PK1, à savoir celle qui est repérée par l'identifiant ID1, est dédiée à l'unité de désembrouillage DSC1, à savoir à l'unité de désembrouillage 14 qui porte également l'identifiant 1. L'association de la clé d'appariement PKn à l'identifiant correspondant IDn peut être réalisé de différentes manières, par exemple au moyen d'un enregistrement (c'est-à-dire un tuple ou une structure de données informatiques) qui contient précisément ces deux éléments. Ainsi, le répertoire 22 comprendra autant d'enregistrements qu'il y a de clés PK et chacun de ces enregistrements comprendra au moins deux données, à savoir la clé PKn et l'identifiant IDn qui lui est associé. En variante, l'association de la clé d'appariement PKn à l'identifiant IDn pourrait être obtenu au moyen de plusieurs répertoires 22 ou sous-répertoires, chacun d'eux étant identifié par un identifiant IDn et comprenant la clé PKn correspondante.

Par ailleurs, chaque clé d'appariement PK est connue de l'unité de désembrouillage 14 pour qui elle est dédiée. De ce fait, chaque clé d'appariement PK est connue uniquement par un couple formé du gestionnaire de clés 20 et de l'unité de désembrouillage 14 pour qui cette clé est réservée. La transmission de cette clé d'appariement PK du gestionnaire 20 à l'unité de désembrouillage 14, ou vice versa, peut typiquement se faire lors d'une phase d'initialisation préalable à toute restitution en clair du contenu audio/vidéo.

La seconde étape de la méthode s'opère principalement au sein du gestionnaire de clés 20. Cette seconde étape vise à réceptionner au moins un mot de contrôle CW transmis, sous une forme chiffrée, par le module de sécurité 30. Pour ce faire, chaque mot de contrôle CW est chiffré par la clé secrète SK qui est connue uniquement du décodeur 10 (en particulier du gestionnaire de clés 20 de ce décodeur) et du module de sécurité 30 associé à ce décodeur 10.

Selon l'invention, le mot de contrôle CW reçu du module de sécurité 30 est référencé par une indication D qui permet d'identifier l'unité de désembrouillage à qui il est destiné. Cette indication D peut être l'identifiant ID de l'unité de désembrouillage 14. Selon un mode de réalisation préféré, cette indication est apposée au sein du décodeur 10 (à savoir dans un environnement local chez l'utilisateur) de manière à ce que le flux de données DT, qui contient notamment les messages de contrôle ECM et donc les mots de contrôle CW, n'ait pas besoin d'être modifié ou personnalisé. Ainsi, le flux de transport TS demeure un flux ordinaire, c'est-à-dire un flux dont la structure est connue de l'état de la technique et des normes en vigueur. Avantageusement, le décodeur 10 décrit dans la présente invention demeure donc compatible avec un tel flux de transport TS.

Dans le mode de réalisation préféré de l'invention, le référencement des mots de contrôle CW par l'indication D est effectué par le module de référencement 24. Ce dernier est relié à chaque dispositif de triage 12 par une voie dédiée au transport des données DT d'un canal audio/vidéo. Ainsi, le module de référencement est à même d'associer un identifiant à chaque paquet de données, en particulier à chaque ECM, issu de chaque canal (CH1, CH2, CH3). Par exemple, les ECMs issus du canal CH1 seront référencés par l'indication D1, ceux issus du canal CH2 par l'indication D2 et ceux du canal CH3 par l'indication D3. Comme chaque mot de contrôle est compris dans un message ECM, cela revient à associer, au sein du décodeur, une indication D aux mots de contrôle en fonction de l'identification d'un canal audio/vidéo duquel chaque mot de control pourra être extrait par l'intermédiaire d'un message ECM.

Après avoir extrait le ou les mots de contrôle CW de chaque ECM, le module de sécurité 30 est à même de reporter sur chaque mot de contrôle l'indication D qui avait été apposée sur le message ECM duquel ce mot de contrôle a été extrait. Une fois reportée sur le mot de contrôle concerné, l'indication D peut être maintenue en clair ou être chiffrée au moyen de la clé secrète SK. De préférence, le mot de contrôle CW et son indication de destination D seront chiffrés en une opération au moyen de la clé secrète SK par le module de sécurité 30. Quel que soit la manière d'opérer, le canal (audio/vidéo) de chaque mot de contrôle demeure identifiable par le gestionnaire de clés 20, même après que ces mots de contrôle aient été traités par le module de sécurité 30.

La troisième étape de la méthode consiste à déchiffrer le mot de contrôle reçu du module de sécurité par le gestionnaire de clés. Pour ce faire, le gestionnaire va utiliser la clé de secrète SK qui est propre au canal sécurisé 25 établi entre ces deux entités. Dans le cas où le mot de contrôle CW et l'indication D associée ont été chiffrés en un bloc par le module de sécurité au moyen de la clé secrète SK, l'opération de déchiffrement du mot de contrôle par le gestionnaire 20 permet également de retrouver en clair l'indication D associée au mot de contrôle en question.

La quatrième étape vise à identifier, dans le répertoire 22, la clé d'appariement PK dont l'identifiant ID correspond à l'indication D associé au mot de contrôle CW reçu du module de sécurité. Cette opération est effectuée par le gestionnaire 20, par exemple en parcourant les enregistrements mémorisés dans le répertoire 22 pour rechercher quel est l'enregistrement qui porte l'identifiant ID correspondant à l'indication D du mot de contrôle. Une fois que le gestionnaire a identifié l'enregistrement recherché, il est alors à même de connaître la clé d'appariement PK qui est associée à l'unité de désembrouillage 14 pour qui ce mot de contrôle est destiné.

La cinquième étape consiste à chiffrer ce mot de contrôle en utilisant la clé d'appariement PK ainsi identifiée. Ce chiffrement peut être exécuté par exemple par le module cryptographique 23 du gestionnaire 20.

En sixième étape, le mot de contrôle est ensuite stocké, dans cette nouvelle forme chiffrée, au sein du registre 15 par le gestionnaire 20. Ce stockage est effectué d'une manière chronologique et référencée de façon à ce que tout mot de contrôle spécifique requis par une unité de désembrouillage puisse être retiré dudit registre afin d'être déchiffré et utilisé par cette unité de désembrouillage pour désembrouiller une partie dudit contenu audio/vidéo.

Le caractère chronologique de ce stockage peut être obtenu en mémorisant les mots de contrôle dans un ordre particulier, notamment dans l'ordre d'arrivée au sein du flux de transport. Cet ordre correspond à l'ordre dans lequel ils devront être utilisés par l'unité de désembrouillage pour déchiffrer le contenu audio/vidéo. Un empilage successif des mots de contrôle traités par le gestionnaire permet de respecter la chronologie de ces mots d'une manière très simple. En variante, il serait également possible d'associer un indice temporel à chaque mot de contrôle stocké dans le registre 15. Un tel indice pourrait prendre la forme d'une valeur incrémentée d'une unité pour chaque nouveau mot de contrôle stocké. L'indice temporel pourrait également prendre la forme d'un horodatage déterminé par une horloge pouvant par exemple être spécifiquement dédiée à cet effet.

Le caractère référencé du stockage des mots de contrôle chiffrés dans le registre 15 peut être obtenu de la même manière que ce qui a déjà été décrit pour référencer les clés d'appariement PK dans le répertoire 22. Ainsi, comme le montre la figure 1, chaque mot de contrôle chiffré au moyen d'une clé d'appariement PK particulière peut être stocké dans un enregistrement incluant l'indication D relative à la destination de ce mot de contrôle [CW]_{PK}. Comme cette indication D permet soit d'identifier le canal CH1, CH2, CH3 associé à ce mot de contrôle, soit d'identifier l'unité de désembrouillage 14 qui devra en faire usage, la destination de chaque mot de contrôle du registre 15 est ainsi dûment identifiée.

Avantageusement, le chiffrement et le déchiffrement des mots de contrôle [CW]_{PK} au moyen de la clé d'appariement PK s'effectue localement au sein du décodeur, en excluant même le module de sécurité de ce dernier. Ainsi, la protection de ces mots de contrôle est une protection qui est unique à chaque décodeur et qui ne concerne que lui. A ce stade, le module de sécurité ne devient donc plus nécessaire pour que soit assuré le désembrouillage du contenu audio/vidéo par les unités de désembrouillage 14. De plus, grâce au répertoire 22 dans lequel peuvent être stockées plusieurs clés d'appariement PK, ce mode de réalisation permet d'attribuer une protection particulière à chaque unité de désembrouillage 14 du décodeur 10. Ainsi, même dans le cas où une des clés PK aurait été craquée par une personne mal intentionnée, cette personne demeurerait incapable de pouvoir déchiffrer les contenus audio/vidéo de tous les autres canaux du flux de transport TS. Le niveau de protection apporté par cette méthode s'en trouve donc avantageusement renforcé.

De plus, le chiffrement des mots de contrôle CW au moyen de la clé d'appariement PK est avantageusement effectué par un seul module cryptographique 23 pour l'ensemble des unités de désembrouillage 14 que compte le décodeur. Du fait que cette opération peut être centralisée, les ressources informatiques du décodeur s'en trouvent rationalisées.

Par ailleurs, la mémoire qui héberge le registre 15 permet avantageusement de stocker un grand nombre de mots de contrôle. Le stockage de ces derniers dans ce registre peut donc être un stockage de durée plus ou moins longue. En effet, le critère qui détermine la durée de ce stockage ne dépend pas de la taille de la mémoire qui héberge le registre comme cela est généralement le cas dans les mémoires de type mémoire tampon (buffer). Dans le présent cas d'espèce, le mot de contrôle peut demeurer dans le registre 15 au moins aussi longtemps qu'il n'est pas utilisé par l'unité de désembrouillage pour qui il est dédié.

Avantageusement, la présente invention permet de pleinement sécuriser l'accès aux mots de contrôle au sein même du décodeur 10. Ainsi, toutes les voies par lesquelles transitent les mots de contrôle sont des voies sécurisées car aucun mot de contrôle n'emprunte de voie sous une forme non protégée. Ainsi, même si une personne mal intentionnée serait tentée d'extraire des mots de contrôle durant leur transit entre le gestionnaire 20 et l'une quelconque des unités de désembrouillage 14 du décodeur, elle ne serait pas en mesure de pouvoir utiliser les données extraites. Grâce à la sécurisation de toutes les voies par lesquels transitent les mots de contrôle au sein du décodeur, il devient également possible de séparer physiquement le gestionnaire 20 ou le registre 15 des unités de désembrouillage 14. Ceci permet d'apporter une souplesse bienvenue dans la composition des décodeurs et notamment de garantir l'agencement le plus judicieux de leurs composants.

Avantageusement encore, la présente invention suggère de stocker, dans le registre 15, les mots de contrôle et non pas les messages ECM. Cette manière de faire permet d'optimiser les ressources informatiques, notamment l'espace mémoire et la rapidité de restitution du mot de contrôle à l'unité de désembrouillage qui en fait la requête au moment de déchiffrer le contenu audio/vidéo. En effet, les messages ECM contiennent des indications relatives aux droits que doivent posséder les utilisateurs (décodeurs). Une fois traitées par le module de sécurité, il est donc opportun de se séparer de ces indications devenues superflues et de ne conserver que les données essentielles au décodeur pour qu'il puisse en tout temps déchiffrer le contenu audio/vidéo. Ainsi, en s'affranchissant du stockage des messages ECM, on se passe également de devoir mémoriser les clés de transmission TK qui permettent de déchiffrer les ECM. Sachant en outre que ces clés de transmission changent régulièrement, on évite également de devoir assurer la gestion temporelle de ces clés de transmission.

Afin d'optimiser davantage le temps de traitement des mots de contrôle par l'algorithme cryptographique chargé de les chiffrer ou de les déchiffrer, on privilégiera le choix d'une clé symétrique comme type de clé d'appariement PK. De plus, on privilégiera également l'utilisation d'algorithmes rapides pour réduire autant que possible le temps nécessaire au chiffrement / déchiffrement d'un simple mot de contrôle.

Avantageusement encore, le recours au répertoire 22 permet de stocker une pluralité de clés d'appariement PK, chacune dûment identifiée et réservée à une des unités de désembrouillage 14 du décodeur. Le recours à ce répertoire permet donc d'apporter une protection spécifique aux différents mots de contrôle en fonction de leur destination ou du canal duquel ils sont issus. La pluralité de clés d'appariement PK permet d'accroître le degré de sécurité mis en oeuvre pour protéger l'accès à l'ensemble des mots de contrôle au sein même du décodeur.

Grâce à la présente invention, on notera que les unité de désembrouillage 14 ne sont chargées que d'effectuer des opérations de décryptage lors du traitement du ou des flux audio/vidéo. En effet, ces opérations visent premièrement à déchiffrer les mots de contrôle au moyen de la clé d'appariement PK et deuxièmement à déchiffrer au moins une portion du contenu audio/visuel au moyen du mot de contrôle venant d'être déchiffré. Ces deux opérations successives peuvent donc être effectuées, d'une part par la même entité (unité de désembrouillage), et d'autre part de façon consécutive de sorte qu'il n'y ait pas d'interruption entre le moment où le mot de contrôle est déchiffré et le moment où il est utilisé dans l'intervalle de temps de la crypto-période. Ainsi, tout risque de subtilisation d'un mot de contrôle en clair par une personne mal intentionnée est réduit à néant puisque son obtention et son utilisation en clair s'effectuent de manière consécutive au sein de la même entité.

Le déchiffrement des mots de contrôle [CW]_{PK} dans l'unité de désembrouillage 14 s'est effectue, comme illustré à la figure 1, à l'intérieur d'un module de déchiffrement 13 de cette unité 14. L'unité de désembrouillage et son module de déchiffrement sont intimement liés et se trouvent de préférence dans la même région sur le silicium d'un composant électronique. De nature monolithique, une telle unité devrait être physiquement brisée pour pouvoir accéder à ses circuits internes, en particulier à son module de déchiffrement 13. Or, une fois détruite, cette unité n'est bien sûr plus capable de déchiffrer des mots de contrôle.

Du fait de sa structure, le registre 15 peut être placée dans un environnement moins sécurisé. Comme illustré schématiquement à la figure 1, le registre 15 des mots de contrôle est de préférence rendu accessible à toute unité de désembrouillage 14 du décodeur 10. Ainsi, lorsqu'une unité de désembrouillage 14 requière un nouveau mot de contrôle (pour pouvoir poursuivre le déchiffrement du contenu audio/vidéo après l'expiration d'une crypto-période), elle peut d'elle-même accéder au registre 15 pour y extraire le prochain mot de contrôle qui lui est destiné, à savoir celui dont l'indication D correspond à l'identifiant ID qui la désigne. En variante, l'unité de désembrouillage 14 peut envoyer une requête au registre 15 (ou au gestionnaire de clés 20) pour signaler qu'elle a besoin de recevoir le prochain mot de contrôle qui la concerne. Grâce à l'identifiant ID qui, par exemple, peut être associé à la requête (pour déterminer l'unité de désembrouillage requérante) et à l'indication D de chaque mot de contrôle, le registre (ou le gestionnaire de clés) peut ensuite rechercher le prochain mot de contrôle de cette unité et le lui transmettre en réponse à sa requête. Dans les deux cas de figure, chaque mot de contrôle requis par toute unité de désembrouillage est transmis tel que stocké dans le registre, à savoir sous une forme chiffrée (au moyen de la clé d'appariement PK spécifique à cette unité).

Au besoin, l'unité de désembrouillage 14 pourrait également stocker, par exemple dans un registre local qui lui est propre, une réserve de mots de contrôle (par exemple le mot de contrôle courant et le mot de contrôle suivant) en prévision de leur utilisation. Dans ce cas, on considérera que l'unité de désembrouillage 14, son registre local ainsi que son module de déchiffrement 13 forment alors une entité monolithique.

Selon un mode de réalisation, le décodeur 10 comprend au moins deux unités de désembrouillage 14 capables de traiter des flux audio/vidéo encryptés selon des algorithmes différents. Par exemple, une première unité de désembrouillage est de type DVB-CSA et une autre est de type AES. Le message de contrôle ECM, contenant le mot de contrôle CW, contient également une indication pour quel type d'algorithme et donc d'unité de désembrouillage il est prévu. Cette indication (D) est stockée dans le registre 15 avec le mot de contrôle [CW]_{PK}.

Il est dès lors possible (mais non nécessaire) d'utiliser une clé de chiffrement différente par type d'unité de désembrouillage. En effet, le gestionnaire 20 peut disposer de plus d'un répertoire 22 de clés d'appariement, par exemple un pour l'unité de désembrouillage DVB-CSA et un autre pour l'unité de désembrouillage AES. Grâce à l'indication (D) reportée sur le mot de contrôle, le gestionnaire 20 peut sélectionner la clé d'appariement PK de l'unité de désembrouillage 14 concernée et encrypter le mot de contrôle CW avec cette clé PK.

Il est à noter que, dans le cas où les unités de désembrouillage 14 peuvent être identifiées en fonction de leur type, l'indication (D) décrite ci-dessus peut être remplacée par la simple détection du format (ou type) du mot de contrôle. Un mot de contrôle pour un chiffrement de type DVB-CSA peut être de taille différente qu'un mot de contrôle pour un chiffrement AES. Ceci permet au gestionnaire 20 de sélectionner la clé d'appariement PK appropriée pour l'unité de désembrouillage concernée.

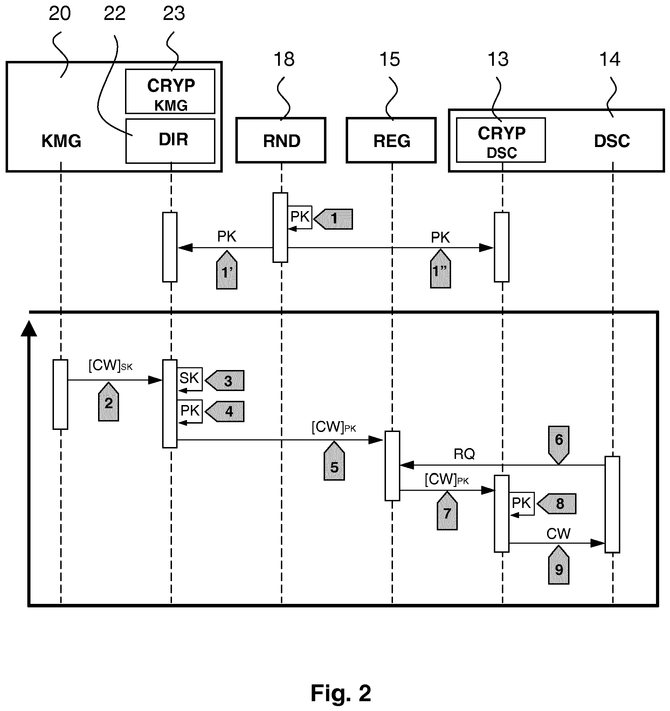

La figure 2 illustre le fonctionnement dynamique de l'ensemble des principaux éléments du décodeur représentés à la figure 1. Pour ce faire, cette figure se présente sous la forme d'un diagramme qui, globalement, se lit de haut en bas et de gauche à droite. Les principaux éléments du décodeur utiles à la compréhension de ce fonctionnement y sont représentés sur la première ligne supérieure. Le fonctionnement dynamique de cet ensemble d'éléments est décrit par une succession d'étapes identifiées par des flèches grisées et numérotées de 1 à 9. Ces étapes définissent deux phases distinctes. La première phase est formée par les étapes (1), (1') et (1"). La seconde phase comprend les étapes (2) à (9) qui, comme l'illustre schématiquement la flèche de forme rectangulaire qui les entoure, sont destinées à être répétées pour chaque mot de contrôle CW.

La première phase vise à charger la clé d'appariement PK. Ce chargement s'opère, d'une part, dans le répertoire 22 du gestionnaire 20 et, d'autre part, dans le module de déchiffrement 13 de l'unité de désembrouillage 14 à qui cette clé d'appariement PK est dédiée. Plusieurs scénarios sont possibles:
- La clé d'appariement PK est chargée de manière permanente lors d'une phase d'initialisation du décodeur. Lors de la fabrication du décodeur, ou lors d'une phase de préparation du décodeur pour un opérateur donné ou un client donné, le décodeur 10 est placé en mode de test et une clé d'appariement PK est générée (soit par l'équipement de test, soit par le processeur du décodeur) et est transmise au répertoire 22 et au module de déchiffrement 13 de l'unité de désembrouillage 14. Cette clé d'appariement PK est stockée pour la vie du décodeur jusqu'à ce qu'un nouveau mode de test soit initialisé.
- La clé d'appariement PK est chargée à chaque mise sous tension du décodeur. Pour cela, une clé d'appariement PK est générée aléatoirement, au moyen du générateur 18, par le gestionnaire 20 ou par le module de déchiffrement 13, et est transmise à l'autre entité, à savoir respectivement au module de déchiffrement 13 ou au gestionnaire 20. Le gestionnaire 20 transférant encore cette clé PK dans le répertoire 22 en vue de son stockage. La clé d'appariement PK est générée aléatoirement par le générateur aléatoire 18. En effet, ce dernier peut être associé, soit au gestionnaire 20, soit à chaque unité de désembrouillage 14, en particulier être intégré dans le module de déchiffrement 13 de chacune de ces unités. Ce générateur 18 peut être une vraie source de nombres aléatoires, une source de nombres pseudo-aléatoires, voire un mélange de données physiques du décodeur, tels que température, date, temps de réaction de la télécommande. La génération de cette clé d'appariement PK est illustrée sur la figure 2 par l'étape (1). Les étapes (1') et (1") illustrent le partage de cette clé d'appariement PK respectivement entre le gestionnaire 20, en particulier le répertoire 22, et l'unité de désembrouillage 14, en particulier le module de déchiffrement 13 de cette unité. Il est à noter que le canal entre ces deux entités 20, 14 est sécurisé (second canal sécurisé), c'est-à-dire qu'une clé de session est négociée entre ces deux entités, par exemple en utilisant l'algorithme Diffie-Helmann. Un autre moyen d'assurer la protection d'un tel canal pourrait consister à recourir à des moyens matériels. Par exemple, le bus sur lequel transitent les échanges ente les entités 20 et 14 pourrait être un bus privé accessible uniquement par ces deux entités.

Les étapes (1), (1') et (1") peuvent donc être formulées de la manière suivante:
- (1) génération d'une clé d'appariement PK par le gestionnaire 20 ou par l'unité de désembrouillage 14,
- attribution, à ladite clé d'appariement PK, de l'identifiant ID propre à l'unité de désembrouillage 14 à qui cette clé d'appariement PK est associée de manière unique,
- (1'), (1") transmission de la clé d'appariement PK ainsi référencée entre le gestionnaire de clés 20 et l'unité de désembrouillage 14 de façon à ce que cette clé d'appariement PK soit connue de ces deux entités.

Selon un mode de réalisation, le nombre aléatoire généré par l'une des deux entités 14, 20 (au moyen du générateur 18) est ensuite appliqué à une fonction cryptographique contenue dans l'entité en question et initialisée par une clé de personnalisation. Cette clé est initialisée lors d'une phase d'initialisation préalable. Ainsi, il est possible de personnaliser chaque décodeur ou groupe de décodeurs avec une valeur particulière de clé de personnalisation. La fonction cryptographique peut est du type à sens unique (fonction Hash). Le résultat de la fonction cryptographique produit la clé d'appariement PK. Même si le générateur de nombre aléatoire a été compromis et génère toujours la même valeur, le fait de modifier cette valeur par la fonction cryptographique va fournir une clé d'appariement qui sera différente d'un (ou d'un groupe) de décodeur à un autre.

L'étape (1) visant à générer la clé d'appariement PK peut donc comprendre les sous-étapes suivantes:
- obtention d'un nombre aléatoire au moyen d'un générateur 18 de nombres aléatoires, d'une source de nombres pseudo-aléatoires, d'un mélange de données physiques du décodeur 10, tels que température, date ou temps de réaction de l'utilisateur,
- application de ce nombre aléatoire à une fonction cryptographique contenue dans le décodeur et initialisée par une clé de personnalisation pour obtenir la clé d'appariement PK.

La deuxième phase de la figure 2 illustre les étapes (2) à (9) entreprises au sein du décodeur pour traiter et gérer chaque mot de contrôle CW, depuis sa réception par le module de sécurité, jusqu'à son utilisation par l'une des unités de désembrouillage 14. Dès que le gestionnaire 20 reçoit un mot de contrôle [CW]_{SK}, il l'envoie (2) au module cryptographique 23. Ce dernier, grâce à la clé secrète SK, le déchiffre (3), puis le ré-encrypte aussitôt (4) grâce à la clé d'appariement PK appropriée qui a pu être identifiée dans le répertoire 22, soit par l'unité centrale 26, soit directement par le module cryptographique 23. L'identification de cette clé d'appariement PK peut être obtenue en établissant une correspondance entre l'identifiant ID associé à la clé PK et l'indication D de destination qui référence le mot de contrôle. Une fois chiffré au moyen de la clé d'appariement PK, le module cryptographique 23 envoi (5) le mot de contrôle [CW]_{PK} dans le registre 15 des mots de contrôle. Ce mot de contrôle pourra y être stocké sous cette nouvelle forme chiffrée au moins aussi longtemps qu'il n'aura pas été utilisé.

Lorsqu'une quelconque des unités de désembrouillage 14 a besoin d'un mot de contrôle pour pouvoir déchiffrer une nouvelle portion du contenu audio/vidéo qu'elle est en train de décrypter, elle le requiert (6) auprès de du registre 15 (par exemple par l'intermédiaire du gestionnaire 20 si ce registre n'est pas autonome) en transmettant par exemple une requête RQ. Visant à obtenir le prochain mot de contrôle qui lui est réservé, cette requête est accompagnée de l'identité de l'unité de désembrouillage 14, de façon à ce que le registre 15 (ou le gestionnaire 20 qui gère ce registre) puisse identifier quel est l'unité de désembrouillage 14 concernée parmi toutes les unités de désembrouillage que compte le décodeur 10. Typiquement, la requête peut contenir une information (ID ou D) qui permet d'assurer cette identification. Une fois que le mot de contrôle [CW]_{PK} approprié est transmis (7) en réponse à la requête de l'unité de désembrouillage (ou est obtenu par cette unité si celle-ci a directement accès au registre 15), il est ensuite déchiffré (8) par le module de déchiffrement 13 au moyen de la clé d'appariement PK dédiée à l'unité de désembrouillage 14. Une fois déchiffré, le mot de contrôle CW est transmis (9) au coeur de l'unité de désembrouillage 14 en vue d'y être utilisé comme clé de déchiffrement pour désembrouiller la portion du contenu audio/vidéo traité par cette unité.

Le second objet de l'invention porte sur le décodeur 10 pour la mise en oeuvre de la méthode décrite, ci-avant, selon l'une quelconque des variantes proposées. Ce décodeur sera donc en charge de désembrouiller au moins un contenu audio/visuel protégé par des mots de contrôle CW. Comme illustré sur la figure 1, ce décodeur 10 comprend un gestionnaire de clés 20 connecté, via un canal sécurisé 25, à un module de sécurité 30 en charge de délivrer des mots de contrôle CW audit décodeur sous une forme chiffrée. Il comprend également au moins deux unités de désembrouillage 14 en charge de déchiffrer chacune un contenu audio/vidéo chiffré par une partie desdits mots de contrôle CW, et un registre 15 de mots de contrôle administré par ledit gestionnaire 20. Ce dernier est configuré pour déchiffrer les mots de contrôle CW reçus dudit module de sécurité 30 et pour les stocker dans le registre 15 sous une forme chiffrée.

Selon l'invention, ce décodeur 10 comprend en outre:
- une mémoire pour stocker un répertoire de clés 22 administré par le gestionnaire 20 et configuré pour répertorier une pluralité de clés d'appariement PK, chaque clé d'appariement PK étant référencée par un identifiant ID qui l'associe de manière unique à une des unités de désembrouillage 14 du décodeur,
- un module de référencement 24 permettant de référencer chaque mot de contrôle CW par une indication D qui identifie l'unité de désembrouillage 14 à qui ce mot de contrôle est destiné en fonction du canal audio/vidéo duquel chaque mot de control est extrait. Chaque canal audio/vidéo pouvant être identifié, soit par un identifiant, soit en fonction de son cheminement au sein du décodeur. Ainsi, chaque canal sortant du démultiplexeur 11 (ou de chaque dispositif de triage 12) peut être repéré et étiqueté d'une étiquette particulière.

Le gestionnaire 20 est également configuré d'une part pour identifier, dans le répertoire 22, la clé d'appariement PK dont l'identifiant ID correspond à l'indication de destination D qui référence tout mot de contrôle CW, et d'autre part pour chiffrer ce mot de contrôle CW à l'aide de la clé d'appariement PK ainsi identifiée. Le chiffrement du mot de contrôle à l'aide de la clé d'appariement PK s'effectuera par exemple au moyen d'un module cryptographique 23 intégré au gestionnaire 20.

Enfin, le registre 15 est configuré pour que les mots de contrôle [CW]_{PK}, chiffrés par la clé d'appariement PK, puissent y être stockés d'une manière chronologique et référencée.

Dans un mode de réalisation, le registre 15 est rendu directement accessible à toute unité de désembrouillage 14 du décodeur 10. Cela peut être rendu possible en dotant par exemple le registre 15 d'une voie d'accès (bus et interface de communication) qui le relie directement à chacune des unités de désembrouillage.

Afin d'assurer le transfert en secret de la clé d'appariement PK du module cryptographique 23 au module de déchiffrement 13, ou vice versa, le décodeur 10 peut être en outre configuré pour pouvoir établir un second canal sécurisé, réservé à cet effet, entre le gestionnaire 20 et les unités de désembrouillage 14. En variante, le décodeur 10 pourrait comprendre, pour chaque unité de désembrouillage 14, un bus privé accessible uniquement au gestionnaire de clés 20 et à l'unité de désembrouillage 14 en question.

Selon un mode de réalisation, le décodeur 10 peut comprendre un générateur 18 de nombres aléatoires pouvant communiquer avec chacune des unités cryptographiques 14. Ainsi, ces dernières seront à même d'obtenir chacune une clé d'appariement PK qui dépend d'un nombre aléatoire issu du générateur 18. Une telle clé d'appariement PK pourrait être obtenue par exemple en appliquant à ce nombre aléatoire une fonction cryptographique initialisée par une clé de personnalisation.

Bien que les objets de la présente invention font référence à un contenu, flux ou canal de type audio/vidéo (ou audio/visuel), on comprendra que des contenus, flux ou canaux d'un autre type pourraient parfaitement être considérés. Ces autres types pourraient faire référence à des données images (photographiques), à des données audio (musicales), à d'autres données multimédia (jeux) ainsi qu'à des données de toute autre nature (programmes informatiques, textes, valeurs numériques, etc...). Ainsi, on comprendra que l'adjectif « audio/vidéo » ou « audio/visuel » qualifiant les termes contenu, flux ou canal dans le présent exposé est accessoire et revêt donc un caractère particulier qui pourrait être généralisé par l'adjectif numérique.

## Revendications

1. Méthode pour sécuriser des mots de contrôle (CW) au sein d'un décodeur (10) en charge de désembrouiller au moins un contenu numérique protégé par lesdits mots de contrôle, ledit décodeur (10) comprenant un gestionnaire de clés (20) connecté, via un canal sécurisé (25), à un module de sécurité (30) en charge de délivrer lesdits mots de contrôle (CW) audit décodeur (10) sous une forme chiffrée, au moins une unité de désembrouillage (14) en charge de déchiffrer le contenu numérique, et un registre (15) de mots de contrôle (CW) administré par ledit gestionnaire (20), la méthode comprenant les étapes suivantes:
- charger, pour chaque unité de désembrouillage (14) dans un répertoire de clés (22) administré par ledit gestionnaire (20), une clé d'appariement (PK) qui d'une part, est référencée par un identifiant (ID) qui l'associe à l'unité de désembrouillage (14) pour qui elle est uniquement dédiée et d'autre part, est connue de cette unité de désembrouillage,
- réceptionner par ledit gestionnaire de clés (20), au moins un mot de contrôle (CW) chiffré par le module de sécurité (30), ledit mot de contrôle (CW) étant en outre référencé par une indication (D) permettant d'identifier l'unité de désembrouillage (14) à qui il est destiné,
- déchiffrer, par le gestionnaire de clés (20), ledit mot de contrôle (CW) au moyen d'une clé de déchiffrement (SK) propre audit canal sécurisé (25),
- identifier, dans ledit répertoire (22), la clé d'appariement (PK) dont l'identifiant (ID) correspond à l'indication de destination (D) associée audit mot de contrôle (CW), puis
- chiffrer ce mot de contrôle (CW) à l'aide de la clé d'appariement (PK) ainsi identifiée, et
- stocker, dans ledit registre (15) d'une manière chronologique et référencée, le mot de contrôle (CW) ainsi chiffré à l'aide de la clé d'appariement (PK) de façon à ce que tout mot de contrôle spécifique requit par une unité de désembrouillage (14) pourra être retiré dudit registre (15) afin d'être déchiffré et utilisé par cette unité de désembrouillage pour désembrouiller une partie dudit contenu numérique.

2. Méthode selon la revendication 1, **caractérisée en ce que** ledit décodeur (10) comprend au moins deux unités de désembrouillage (14).

3. Méthode selon la revendication 1 ou 2, **caractérisée en ce que** l'association de ladite indication de destination (D) auxdits mots de contrôle (CW) est effectuée au sein dudit décodeur (10), en fonction de l'identification d'un canal numérique duquel chaque mot de control est extrait au sein du décodeur.

4. Méthode selon l'une des revendications précédentes, **caractérisée en ce que** ledit registre (15) des mots de contrôle est rendu accessible à toute unité de désembrouillage (14) du décodeur (10).

5. Méthode selon l'une des revendications 1 à 3, **caractérisée en ce que** chaque mot de contrôle (CW) requis par toute unité de désembrouillage (14) est transmis tel que stocké dans ledit registre (15), sur requête de cette dernière, par ledit gestionnaire de clés (20).

6. Méthode selon la revendication 1, **caractérisée en ce que** ladite clé d'appariement (PK) est chargée dans ledit répertoire de clés (22) par le gestionnaire de clés (20) au terme des étapes suivantes :
- génération d'une clé d'appariement (PK) par le gestionnaire de clés (20) ou par l'unité de désembrouillage (14),
- attribution, à ladite clé d'appariement (PK), dudit identifiant (ID) propre à l'unité de désembrouillage (14) à qui cette clé d'appariement (PK) est associée de manière unique,
- transmission de la clé d'appariement (PK) entre le gestionnaire de clés (20) et l'unité de désembrouillage (14) de façon à ce que ladite clé d'appariement (PK) soit connue du gestionnaire de clés (20) et de l'unité de désembrouillage (14) à qui cette clé est dédiée.

7. Méthode selon la revendication 6, **caractérisée en ce que** ladite clé d'appariement (PK) est générée par les étapes suivantes:
- obtention d'un nombre aléatoire au moyen d'un générateur (18) de nombres aléatoires, d'une source de nombres pseudo-aléatoires ou d'un mélange de données physiques du décodeur (10) tels que température, date ou temps de réaction d'un utilisateur,
- application dudit nombre aléatoire à une fonction cryptographique contenue dans le décodeur (10) et initialisée par une clé de personnalisation pour l'obtention de ladite clé d'appariement (PK).

8. Méthode selon la revendication 6 ou 7, **caractérisée en ce que** la transmission de ladite clé d'appariement (PK) entre le gestionnaire de clés (20) et ladite unité de désembrouillage (14) est réalisée au sein d'un second canal sécurisé.

9. Méthode selon la revendication 6 ou 7, **caractérisée en ce que** la transmission de ladite clé de désembrouillage (PK) entre le gestionnaire de clés (20) et ladite unité de désembrouillage (14) est réalisée sur un bus privé uniquement accessible par ledit gestionnaire (20) et ladite unité de désembrouillage (14).

10. Méthode selon la revendication 1, **caractérisée en ce que** ladite clé d'appariement (PK) est chargée dans ledit répertoire de clés (15) de manière permanente lors d'une phase d'initialisation préalable à toute restitution en clair dudit contenu numérique.

11. Décodeur (10) pour la mise en oeuvre de la méthode selon l'une quelconque des revendications 1 à 10, comprenant un gestionnaire de clés (20) connecté, via un canal sécurisé (25), à un module de sécurité (30) en charge de délivrer des mots de contrôle (CW) audit décodeur sous une forme chiffrée, au moins deux unités de désembrouillage (14) en charge de déchiffrer chacune un contenu numérique chiffré par certains desdits mots de contrôle (CW), et un registre (15) de mots de contrôle administré par ledit gestionnaire de clés (20), ledit gestionnaire de clés (20) étant encore configuré pour déchiffrer les mots de contrôle (CW) reçus dudit module de sécurité (30) et pour les stocker dans ledit registre (15) sous une forme chiffrée, **caractérisé en ce qu'**il comprend en outre:
- une mémoire pour stocker un répertoire (15) de clés administré par ledit gestionnaire (20) et configuré pour répertorier une pluralité de clés d'appariement (PK), chaque clé d'appariement (PK) étant référencée par un identifiant (ID) qui l'associe de manière unique à une desdites unités de désembrouillage (14) du décodeur (10),
- un module de référencement (24) permettant de référencer chaque mot de contrôle (CW) par une indication (D) qui identifie l'unité de désembrouillage (14) à qui ce mot de contrôle (CW) est destiné en fonction d'un canal numérique duquel chaque mot de control (CW) est extrait,
ledit gestionnaire de clés (20) étant en outre configuré pour pouvoir identifier, dans ledit répertoire (22), la clé d'appariement (PK) dont l'identifiant (ID) correspond à l'indication de destination (D) qui référence ledit mot de contrôle (CW), et chiffrer ce mot de contrôle (CW) à l'aide de la clé d'appariement (PK) ainsi identifiée, et
ledit registre (15) étant configuré pour stocker, d'une manière chronologique et référencée, chaque mot de contrôle (CW) chiffré par une desdites clés d'appariement (PK).

12. Décodeur (10) selon la revendication 11, **caractérisé en ce que** ledit registre (15) des mots de contrôle est rendu directement accessible à toute unité de désembrouillage (14) du décodeur.

13. Décodeur (10) selon la revendication 11 ou 12, **caractérisé en ce qu'**il est configuré pour pouvoir établir un second canal sécurisé réservé à la transmission d'une clé d'appariement (PK) entre le gestionnaire (20) et chacune desdites unités de désembrouillage (14).

14. Décodeur (10) selon la revendication 11 ou 12, **caractérisé en ce qu'**il comprend, pour chaque unité de désembrouillage (14), un bus privé accessible uniquement au gestionnaire de clés (20) et à ladite unité de désembrouillage (14) pour la transmission de la clé d'appariement dédiée à cette unité de désembrouillage.

15. Décodeur (10) selon l'une des revendications 11 à 14, **caractérisé en ce qu'**il comprend un générateur (18) de nombres aléatoires pouvant communiquer avec chacune des unités cryptographiques (14) pour que ces dernières puissent chacune obtenir une clé d'appariement (PK) en appliquant à un nombre aléatoire, issu dudit générateur (18), une fonction cryptographique initialisée par une clé de personnalisation.

## Patentansprüche

1. Verfahren, um Kontrollwörter (CW) in einem Decoder (10) zu sichern, der die Aufgabe hat, mindestens einen digitalen Inhalt zu entschlüsseln, der von den Kontrollwörtern geschützt wird, wobei besagter Decoder (10) einen Key Manager (20) umfasst, der über einen gesicherten Kanal (25) mit einem Sicherheitsmodul (30) verbunden ist, das die Aufgabe hat, die Kontrollwörter (CW) an den genannten Decoder (10) in verschlüsselter Form zu liefern, mindestens eine Entschlüsselungseinheit (14) mit der Aufgabe, den digitalen Inhalt zu entschlüsseln, und ein Register (15) von Kontrollwörtern (CW), das von besagtem Manager (20) verwaltet wird, wobei das Verfahren die folgenden Schritte umfasst:
- Laden, für jede Entschlüsselungseinheit (14) in einem Repertoire von Schlüsseln (22), das von besagtem Manager (20) verwaltet wird, eines Paarungsschlüssels (PK), der einerseits durch eine Kennung (ID) bezeichnet wird, die ihn mit der Entschlüsselungseinheit assoziiert (14), der allein er gewidmet ist und ist andererseits dieser Entschlüsselungseinheit bekannt,
- Empfang, durch besagten Key Manager (20), mindestens eines Kontrollworts (CW), das von dem Sicherheitsmodul (30) verschlüsselt wurde, besagtes Kontrollwort (CW) wird außerdem durch eine Angabe (D) bezeichnet, wodurch es möglich wird, die Entschlüsselungseinheit (14) zu identifizieren, für die es bestimmt ist,
- Entschlüsselung, durch den Key Manager (20), des Kontrollworts (CW) mittels eines Entschlüsselungsschlüssels (SK), der dem genannten gesicherten Kanal (25) gehört,
- Identifizierung, in besagtem Repertoire (22), des Paarungsschlüssels (PK), dessen Kennung (ID) der Bestimmungsangabe (D) entspricht, die mit dem Kontrollwort (CW) verbunden ist, dann
- Chiffrieren dieses Kontrollworts (CW) mit Hilfe des so identifizierten Paarungsschlüssels (PK), und
- Speichern, in besagtem Register (15) auf chronologische und referenzierte Art, des so verschlüsselten Kontrollworts (CW), mit Hilfe des Paarungsschlüssels (PK), damit jedes spezifische Kontrollwort, das von einer Entschlüsselungseinheit (14) angefordert wird, aus dem genannten Register (15) herausgezogen werden kann, um von dieser Entschlüsselungseinheit entschlüsselt und benutzt zu werden, um einen Teil des genannten digitalen Inhalts zu entschlüsseln.

2. Verfahren nach Anspruch 1, **dadurch gekennzeichnet, dass** besagter Decoder (10) mindestens zwei Entschlüsselungseinheiten (14) umfasst.

3. Verfahren nach Anspruch 1 oder 2, **dadurch gekennzeichnet, dass** die Assoziation der besagten Bestimmungsangabe (D) mit den genannten Kontrollwörtern (CW) in dem genannten Decoder (10) durchgeführt wird je nach der Identifizierung eines digitalen Kanals, aus dem jedes Kontrollwort in dem Decoder extrahiert wird.

4. Verfahren nach einem der vorangegangenen Ansprüche, **dadurch gekennzeichnet, dass** besagtes Register (15) der Kontrollwörter jeder Entschlüsselungseinheit (14) des Decoders (10) zugänglich gemacht wird.

5. Verfahren nach einem der Ansprüche 1 bis 3, **dadurch gekennzeichnet, dass** jedes Kontrollwort (CW), das von jeder Entschlüsselungseinheit (14) angefordert wird, so übertragen wird, wie es in besagtem Register (15) gespeichert ist, auf Anfrage von letzterer, von besagtem Key Manager (20).

6. Verfahren nach Anspruch 1, **dadurch gekennzeichnet, dass** besagter Paarungsschlüssel (PK) in besagtem Repertoire von Schlüsseln (22) vom Key Manager (20) am Ende der folgende Schritte geladen wird:
- Erzeugung eines Paarungsschlüssels (PK) durch den Key Manager (20) oder durch die Entschlüsselungseinheit (14),
- Zuweisung, zu besagtem Paarungsschlüssel (PK), der genannten Kennung (ID), die der Entschlüsselungseinheit (14) zueigen ist, mit der dieser Paarungsschlüssel (PK) auf eindeutige Art verbunden ist,
- Übertragung des Paarungsschlüssels (PK) zwischen dem Key Manager (20) und der Entschlüsselungseinheit (14), damit besagter Paarungsschlüssel (PK) sowohl dem Key Manager (20) als auch der Entschlüsselungseinheit (14), der dieser Schlüssel gewidmet ist, bekannt ist.

7. Verfahren nach Anspruch 6, **dadurch gekennzeichnet, dass** besagter Paarungsschlüssel (PK) durch die folgenden Schritte erzeugt wird:
- Erhalt eines Zufallszahl mittels eines Generators (18) von Zufallszahlen, von einer Quelle von pseudo-zufälligen Zahlen oder einer Mischung von physischen Daten des Decoders (10) wie Temperatur, Datum oder Reaktionszeit eines Benutzers,
- Anwendung der genannten Zufallszahl auf eine kryptografische Funktion in dem Decoder (10), initialisiert von einem Personalisierungsschlüssel für den Erhalt von besagtem Paarungsschlüssel (PK).

8. Verfahren nach Anspruch 6 oder 7, **dadurch gekennzeichnet, dass** die Übertragung von besagtem Paarungsschlüssel (PK) zwischen dem Key Manager (20) und besagter Entschlüsselungseinheit (14) in einem zweiten gesicherten Kanal erfolgt.

9. Verfahren nach Anspruch 6 oder 7, **dadurch gekennzeichnet dass** die Übertragung von besagtem Entschlüsselungsschlüssel (PK) zwischen dem Key Manager (20) und besagter Entschlüsselungseinheit (14) auf einem privaten Bus erfolgt, der nur für besagten Manager (20) und besagte Entschlüsselungseinheit (14) zugänglich ist.

10. Verfahren nach Anspruch 1, **dadurch gekennzeichnet, dass** besagter Paarungsschlüssel (PK) in einer Initialisierungsphase vor jeder unverschlüsselter Rückgabe des genannten digitalen Inhalts permanent in besagtes Repertoire von Schlüsseln (15) geladen wird.

11. Decoder (10) zur Durchführung des Verfahrens nach einem beliebigen der Ansprüche 1 bis 10, der einen Key Manager (20) umfasst, der über einen gesicherten Kanal (25) mit einem Sicherheitsmodul (30) verbunden ist, das die Aufgabe hat, dem genannten Decoder Kontrollwörter (CW) in verschlüsselter Form zu liefern, mindestens zwei Entschlüsselungseinheiten (14) mit der Aufgabe, je einen digitalen Inhalt zu entschlüsseln, der durch bestimmte der genannten Kontrollwörter (CW) verschlüsselt wurde, und ein Register (15) von Kontrollwörtern, das von besagtem Key Manager (20) verwaltete wird, besagter Key Manager (20) ist auch konfiguriert, um die Kontrollwörter (CW) zu entschlüsseln, die er vom genannten Sicherheitsmodul (30) empfangen hat, und sie in besagtem Register (15) in verschlüsselter Form zu speichern, **gekennzeichnet dadurch, dass** er außerdem umfasst:
- einen Speicher, um ein Repertoire (15) von Schlüsseln zu speichern, das von besagtem Manager (20) verwaltet wird und konfiguriert ist, um eine Vielzahl von Paarungsschlüsseln (PK) aufzunehmen, jeder Paarungsschlüssel (PK) ist durch eine Kennung (ID) referenziert, die ihn auf eindeutige Art mit einer der besagten Entschlüsselungseinheiten (14) des Decoders (10) assoziiert,
- ein Referenzierungsmodul (24), das es ermöglicht, jedes Kontrollwort (CW) durch eine Angabe (D) zu referenzieren, die die Entschlüsselungseinheit (14) identifiziert, für die dieses Kontrollwort (CW) bestimmt ist, je nach einem digitalen Kanal, aus dem jedes Kontrollwort (CW) extrahiert wird,
besagter Key Manager (20) ist außerdem konfiguriert, um in besagtem Repertoire (22) den Paarungsschlüssel (PK) identifizieren zu können, dessen Kennung (ID) der Bestimmungsangabe (D) entspricht, die besagtes Kontrollwort (CW) referenziert, und dieses Kontrollwort (CW) mit Hilfe des so identifizierten Paarungsschlüssels (PK) zu verschlüsseln, und
besagtes Register (15) ist konfiguriert, um auf chronologische und referenzierte Art jedes Kontrollwort (CW) zu speichern, das von einem der besagten Paarungsschlüssel (PK) verschlüsselt wurde.

12. Decoder (10) nach Anspruch 11, **gekennzeichnet dadurch, dass** besagtes Register (15) der Kontrollwörter jeder Entschlüsselungseinheit (14) des Decoders direkt zugänglich gemacht wird.

13. Decoder (10) nach Anspruch 11 oder 12, **gekennzeichnet dadurch, dass** er konfiguriert ist, um einen zweiten gesicherten Kanal aufbauen zu können, der für die Übertragung eines Paarungsschlüssels (PK) zwischen dem Manager (20) und jeder der besagten Entschlüsselungseinheiten (14) reserviert ist.

14. Decoder (10) nach Anspruch 11 oder 12, **gekennzeichnet dadurch, dass** er für jede Entschlüsselungseinheit (14) einen privaten Bus umfasst, der nur für den Key Manager (20) und besagte Entschlüsselungseinheit (14) zugänglich ist, zur Übertragung des Paarungsschlüssels, der dieser Entschlüsselungseinheit gewidmet ist.

15. Decoder (10) nach einem der Ansprüche 11 bis 14, **gekennzeichnet dadurch, dass** er einen Generator (18) von Zufallszahlen umfasst, der mit jeder der kryptografischen Einheiten (14) kommunizieren kann, damit letztere je einen Paarungsschlüssel (PK) erhalten können, indem sie auf eine Zufallszahl, die vom genannten Generator (18) ausgegeben wird, eine kryptografische Funktion anwenden, die von einem Personalisierungsschlüssel initialisiert wird.

## Claims

1. Method for securing control words (CW) within a decoder (10) in charge of descrambling at least a digital content protected by said control words, said decoder (10) comprising a key manager (20) connected, via a secure channel (25), to a security module (30) in charge of issuing said control words (CW) to said decoder (10) in an encrypted form, at least one descrambling unit (14) in charge of decrypting the digital content, and a control word register (15) managed by said manager (20), the method comprising the following steps:
- loading, for each descrambling unit (14) in a key directory (22) managed by said manager (20), a pairing key (PK) which on the one hand is referenced by an identifier (ID) which associates it to the descrambling unit (14) for which it is uniquely dedicated and on the other hand is known by this descrambling unit,
- receiving, by said key manager (20), at least one control word (CW) encrypted by the security module (30), said control word (CW) being further referenced by an indication (D) allowing to identify the descrambling unit (14) for which it is intended,
- decrypting, by the key manager (20), said control word (CW) by means of a decryption key (SK) specific to said secure channel (25),
- identifying, in said directory (22), the pairing key (PK) whose identifier (ID) corresponds to the indication of destination (D) associated to said control word (CW), then
- encrypting this control word (CW) using the pairing key (PK) identified in this way, and
- storing, in said register (15) in a chronological and referenced way, the control word (CW) thus encrypted using the pairing key (PK), so that any specific control word required by a descrambling unit (14) may be withdrawn from said register (15) in order to be decrypted and used by this descrambling unit to descramble a part of said digital content.

2. Method according to claim 1, **characterized in that** said decoder (10) comprises at least two descrambling units (14).

3. Method according to claim 1 or 2, **characterized in that** the association of said indication of destination (D) to said control words (CW) is carried out within said decoder (10), on the basis of the identification of a digital channel from which each control word is extracted within the decoder.

4. Method according to any of preceding claims, **characterized in that** said control word register (15) is made accessible to any descrambling unit (14) of the decoder (10).

5. Method according to any of claims 1 to 3, **characterized in that** each control word (CW) required by any descrambling unit (14) is transmitted, as stored in said register (15), by said key manager (20) upon request of said descrambling unit (14).

6. Method according to claim 1, **characterized in that** said pairing key (PK) is loaded in said key directory (22) by the key manager (20) at the end of the following steps:
- generating a pairing key (PK) by the key manager (20) or by the descrambling unit (14),
- assigning, to said pairing key (PK), said identifier (ID) specific to the descrambling unit (14) to which this pairing key (PK) is associated in a unique way,
- transmitting the pairing key (PK) between the key manager (20) and the descrambling unit (14), so that said pairing key (PK) is known by the key manager (20) and by the descrambling unit (14) to which this pairing key is dedicated.

7. Method according to claim 6, **characterized in that** said pairing key (PK) is generated by the following steps:
- obtaining a random number by means of a random number generator (18), a pseudo-random number source or a mixture of physical data of the decoder (10) such as temperature, date or user's reaction time,
- applying of said random number to a cryptographic function contained in the decoder (10) and initialized by a personalization key for obtaining said pairing key (PK).

8. Method according to claim 6 or 7, **characterized in that** the transmission of said pairing key (PK) between the key manager (20) and said descrambling unit (14) is carried out using a second secure channel.

9. Method according to claim 6 or 7, **characterized in that** the transmission of said descrambling key (PK) between the key manager (20) and said descrambling unit (14) is carried out using a private bus uniquely accessible by said manager (20) and said descrambling unit (14).

10. Method according to claim 1, **characterized in that** said pairing key (PK) is loaded in said key directory (15) in a permanent way during an initialization phase previous to any restitution in the clear of said digital content.

11. Decoder (10) for implementing the method according to any of claims 1 to 10, comprising a key manager (20) connected, via a secure channel (25), to a security module (30) in charge of issuing control words (CW) to said decoder in an encrypted form, at least two descrambling units (14) each in charge of decrypting a digital content encrypted by some of said control words (CW), and a control word register (15) managed by said key manager (20), said key manager (20) being further configured to decrypt the control words (CW) received from said security module (30) and to store them in said register (15) in an encrypted form, **characterized in that** it further includes:
- a memory for storing a directory (15) of keys managed by said manager (20) and configured to record a plurality of pairing keys (PK), each pairing key (PK) being referenced by an identifier (ID) which associates it in a unique way to one of said descrambling units (14) of the decoder (10),
- a referencing module (24) allowing to reference each control word (CW) by an indication (D) which identifies the descrambling unit (14) for which this control word (CW) is intended based on a digital channel from which each control word (CW) is extracted,
said key manager (20) being further configured to identify, in said directory (22), the pairing key (PK) whose identifier (ID) corresponds to the indication of destination (D) which references said control word (CW), and to encrypt this control word (CW) using the pairing key (PK) identified in this way, and
said register (15) being configured to store, in a chronological and referenced way, each control word (CW) encrypted by one of said pairing keys (PK).

12. Decoder (10) according to claim 11, **characterized in that** said control word register (15) is made directly accessible to any descrambling unit (14) of the decoder.

13. Decoder (10) according to claim 11 or 12, **characterized in that** it is configured to establish a second secure channel reserved for the transmission of a pairing key (PK) between the manager (20) and each of said descrambling units (14).

14. Decoder (10) according to claim 11 or 12, **characterized in that** it includes, for each descrambling unit (14), a private bus accessible uniquely by the key manager (20) and by said descrambling unit (14) for the transmission of the pairing key dedicated to said descrambling unit.

15. Decoder (10) according to any of claims 11 to 14, **characterized in that** it includes a random number generator (18) able to communicate with each of the cryptographic units (14) so that each of these units may obtain a pairing key (PK) by applying to a random number, issued by said generator (18), a cryptographic function initialized by a personalization key.
